(19) Europäisches Patentamt / European Patent Office / Office européen des brevets

(11) **EP 4 617 879 A1**

(12) **EUROPEAN PATENT APPLICATION**

(43) Date of publication:
**17.09.2025 Bulletin 2025/38**

(21) Application number: **25163807.8**

(22) Date of filing: **14.03.2025**

(51) International Patent Classification (IPC):
**G06F 11/07** (2006.01)   **G06N 3/045** (2023.01)
**G06N 3/0464** (2023.01)

(52) Cooperative Patent Classification (CPC):
**G06N 3/0442; G06F 11/3476; G06N 3/044;
G06N 3/045; G06N 3/0464; G06N 3/08;**
G06F 2201/865

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **14.03.2024 US 202418605395**

(71) Applicant: **Viavi Solutions Inc.
Chandler, AZ 85286 (US)**

(72) Inventors:
• **IHALAGE, Achintha**
**Harpenden, AL5 5AT (GB)**
• **TAHERI, Sayed**
**Stockport, SK4 2DG (GB)**
• **MUHAMMAD, Faris**
**Edgware, HA8 6RA (GB)**
• **AL-RAWESHIDY, Hamed**
**New Denham, UB9 5EG (GB)**

(74) Representative: **Murgitroyd & Company
165-169 Scotland Street
Glasgow G5 8PL (GB)**

(54) **CONVOLUTIONAL NEURAL NETWORK FOR SOFTWARE LOG CLASSIFICATION**

(57)      In some implementations, a device may provide a software log to a convolutional neural network (CNN) associated with software log classification, wherein the CNN is associated with an embedding layer that is initialized with character embeddings extracted from a sequence-to-sequence model, and the CNN is associated with a block of one-dimensional convolutional layers that follows the character embeddings. The device may generate a software log classification using the CNN, wherein the software log classification indicates whether the software log is associated with an issue and a telecommunications protocol stack in which the issue or a defect has occurred.

FIG. 1

# EP 4 617 879 A1

**Description**

BACKGROUND

A network test device may be used by network equipment manufacturers for function, system integration, capacity, and stress testing and emulation of a plurality of mobile devices, across multiple cells, to set up and test network nodes, such as Fourth Generation (4G) and Fifth Generation (5G) network nodes. A network test device may deliver voice, data, realistic mobility models, and 4G/5G core emulation, thereby providing a comprehensive validation solution. A network test device may ensure that users in a network are obtaining adequate quality of service. A network test device may ensure that the network is satisfying latency and round-trip time requirements for voice and time-critical applications.

SUMMARY

In some implementations, a method includes providing, by a device, a software log to a convolutional neural network (CNN) associated with software log classification, wherein the CNN is associated with an embedding layer that is initialized with character embeddings extracted from a sequence-to-sequence model, and the CNN is associated with a block of one-dimensional convolutional layers that follows the character embeddings; and generating, by the device, a software log classification using the CNN, wherein the software log classification indicates whether the software log is associated with an issue and a telecommunications protocol stack in which the issue or a defect has occurred.

The sequence-to-sequence model may be based on long short-term memory (LSTM) units, and token embeddings extracted from the sequence-to-sequence model may be used to initialize the embedding layer of the CNN.

The software log classification may be one of: a first value that indicates that the software log does not have any issues; a second value that indicates that the issue is at a physical layer; a third value that indicates that the issue is at a data link layer; or a fourth value that indicates that the issue is at a network layer or at a higher layer.

The method may further comprises: providing, by the device, a historical raw logs database to a pre-processing unit; capturing, by the device and via the pre-processing unit, software logs related to one or more network testing categories, wherein the one or more network testing categories are associated with one or more of single-user equipment (UE), single-cell, multi-UE, multi-cell, New Radio (NR) Fifth Generation (5G) tests, Long Term Evolution (LTE) tests, or layer 3 (L3) tests; obtaining, by the device, pre-processed software logs; performing, by the device, a detection and a removal of outlier logs from the pre-processed software logs; creating, by the device, a training corpus based on a concatenation of resulting software logs, wherein unique characters present in the training corpus are used as tokens based on a level of correlation between software logs and natural language; encoding, by the device, a piece of text within the training corpus and obtaining a corresponding numerical representation, based on using the unique characters as the tokens; creating, by the device, a training sequence based on a sequence length equal to a median length of message blocks, in terms of a number of characters, in the software logs; creating, by the device, tuples of input and target sequences with matching lengths, wherein equal and fixed-length input and target sequences enables a recurrent neural network (RNN) architecture without an explicit decoder for sequence-to-sequence learning; and forming, by the device and based on the tuples of input and target sequences, the sequence-to-sequence model, wherein the sequence-to-sequence model is associated with the embedding layer and a long short-term memory (LSTM) layer.

The embedding layer may represent characters in a vocabulary with an embedding of a number of dimensions chosen heuristically, wherein the embedding layer may be followed by the LSTM layer that returns processed sequences and a dense layer with a number of units equal to a vocabulary size, and the dense layer may be applied across returned sequences by the LSTM layer.

The software log may include raw data generated by a telecommunications network emulator.

The software log may be an input text sequence having up to 200,000 characters in a telecommunications domain.

The sequence-to-sequence model may be associated with language understanding, and the CNN may be a residual CNN associated with software log classification.

The CNN may be associated with a first accuracy level and a large language model (LLM) for software log classification may be associated with a second accuracy level, and the first accuracy level may be greater than the second accuracy level.

The LLM for software log classification may be associated with domain-specific pre-training and subsequent fine tuning on data using low-rank adaptation (LoRA), and the LLM may be associated with an adaptable overlapping sliding window to extract pre-trained LLM embeddings of software logs that exceed a typical context window of LLMs.

The CNN may be deployable on an edge device.

In some implementations, a device includes one or more memories; and one or more processors, communicatively coupled to the one or more memories, configured to: provide a software log to a CNN associated with software log classification, wherein the CNN is associated with an embedding layer that is initialized with character embeddings extracted from a sequence-to-sequence model, and the CNN is associated with a block of one-dimensional convolutional layers that follows the character embeddings; and generate a software log classification using the CNN, wherein the software log classification indicates whether the software log is associated with an issue and a telecommunications protocol stack in which the issue or a defect has occurred.

The sequence-to-sequence model may be based on long short-term memory (LSTM) units, and token embeddings extracted from the sequence-to-sequence model may be used to initialize the embedding layer of the CNN.

The software log classification may be one of: a first value that indicates that the software log does not have any issues; a second value that indicates that the issue is at a physical layer; a third value that indicates that the issue is at a data link layer; or a fourth value that indicates that the issue is at a network layer or at a higher layer.

The device may further comprises: providing, by the device, a historical raw logs database to a pre-processing unit; capturing, by the device and via the pre-processing unit, software logs related to one or more network testing categories, wherein the one or more network testing categories are associated with one or more of single-user equipment (UE), single-cell, multi-UE, multi-cell, New Radio (NR) Fifth Generation (5G) tests, Long Term Evolution (LTE) tests, or layer 3 (L3) tests; obtaining, by the device, pre-processed software logs; performing, by the device, a detection and a removal of outlier logs from the pre-processed software logs; creating, by the device, a training corpus based on a concatenation of resulting software logs, wherein unique characters present in the training corpus are used as tokens based on a level of correlation between software logs and natural language; encoding, by the device, a piece of text within the training corpus and obtaining a corresponding numerical representation, based on using the unique characters as the tokens; creating, by the device, a training sequence based on a sequence length equal to a median length of message blocks, in terms of a number of characters, in the software logs; creating, by the device, tuples of input and target sequences with matching lengths, wherein equal and fixed-length input and target sequences enables a recurrent neural network (RNN) architecture without an explicit decoder for sequence-to-sequence learning; and forming, by the device and based on the tuples of input and target sequences, the sequence-to-sequence model, wherein the sequence-to-sequence model is associated with the embedding layer and a long short-term memory (LSTM) layer.

The embedding layer may represent characters in a vocabulary with an embedding of a number of dimensions chosen heuristically, wherein the embedding layer may be followed by the LSTM layer that returns processed sequences and a dense layer with a number of units equal to a vocabulary size, and the dense layer may be applied across returned sequences by the LSTM layer.

The software log may include raw data generated by a telecommunications network emulator. The software log may be an input text sequence having up to 200,000 characters in a telecommunications domain. The sequence-to-sequence model may be associated with language understanding. The CNN may be a residual CNN associated with software log classification. The CNN may be deployable on an edge device.

The CNN may be associated with a first accuracy level and a large language model (LLM) for software log classification may be associated with a second accuracy level, and the first accuracy level may be greater than the second accuracy level.

The LLM for software log classification may be associated with domain-specific pre-training and subsequent fine tuning on data using low-rank adaptation (LoRA), and the LLM may be associated with an adaptable overlapping sliding window to extract pre-trained LLM embeddings of software logs that exceed a typical context window of LLMs.

In some implementations, a non-transitory computer-readable medium storing a set of instructions includes one or more instructions that, when executed by one or more processors of a device, cause the device to: provide a software log to a CNN associated with software log classification, wherein the CNN is associated with an embedding layer that is initialized with character embeddings extracted from a sequence-to-sequence model, and the CNN is associated with a block of one-dimensional convolutional layers that follows the character embeddings; and generate a software log classification using the CNN, wherein the software log classification indicates whether the software log is associated with an issue and a telecommunications protocol stack in which the issue or a defect has occurred.

BRIEF DESCRIPTION OF THE DRAWINGS

Fig. 1 is a diagram of an example associated with a workflow demonstrating data preparation and an architecture of a sequence-to-sequence model.

Fig. 2 is a diagram of an example associated with a residual CNN architecture for software log classification.

Fig. 3 is a diagram of an example associated with training progress curves for a residual CNN model.

Fig. 4 is a diagram of an example of a table associated with performance metrics.

Fig. 5 is a diagram of an example of confusion matrices of different models.

Fig. 6 is a diagram of an example of a performance of a residual CNN model with varying context size.

Fig. 7 is a diagram of an example of an overlapping sliding window approach for text embedding extraction of a long document.

Fig. 8 is a diagram of an example of a classification performance of ML models trained on text embeddings extracted from various large language models (LLMs), evaluated on a test set.

Fig. 9 is a diagram of an example environment in which systems and/or methods described herein may be implemented.

Fig. 10 is a diagram of example components of one or more devices of Fig. 9.

Fig. 11 is a flowchart of an example process relating to software log classification using CNNs.

DETAILED DESCRIPTION

The following detailed description of example implementations refers to the accompanying drawings. The same reference numbers in different drawings may identify the same or similar elements.

As the telecommunications industry rapidly evolves into a Fifth Generation (5G) and Sixth Generation (6G) era, the scope and complexity of network testing have expanded at an unprecedented rate. Network testing may involve emulating user equipments (UEs) and their intricate interactions with the network infrastructure. Network testing may enable network operators and equipment manufacturers to evaluate the quality and capacity of their wireless networks, ensure compliance with industry-standard protocols, and effectively troubleshoot issues while optimizing network performance. A network test device may be a specialized device that employs advanced dedicated hardware for network testing.

Network testing may involve the generation of voluminous and highly complex software logs that are indispensable for troubleshooting and defect triaging. Raw logs (e.g., telecommunications raw logs) analyzed in this context may stand apart in their complexity and nature from conventional software logs, exhibiting a vast diversity of commands and parameters, configured in real-time under dynamic industrial conditions. A structure and semantics of the raw logs may bear little correlation to natural language. Therefore, only expert engineers with extensive experience in the field may be able to navigate through these logs to identify issues in a network emulation. Such manual analysis may be inefficient, error prone, less scalable, and vulnerable to knowledge silos.

Similarly, software logs generated by sophisticated network emulators in the telecommunications industry are extremely complex, often comprising tens of thousands of text lines with minimal resemblance to natural language. Only specialized expert engineers can decipher such logs and troubleshoot defects in test runs. While artificial intelligence (AI) offers a promising solution for automating defect triage, state-of-the-art LLMs suffer from significant drawbacks in this specialized domain. Such drawbacks may include a constrained context window, limited applicability to text beyond natural language, and high inference costs.

The application of machine learning (ML) and natural language processing (NLP) techniques has demonstrated success in classification and extraction of insights from text-based software logs. Log analysis may use ML techniques for anomaly detection, where such ML techniques may include supervised classical models, CNNs, long short-term memory (LSTM) based networks or hybrid models, LLMs, other transformer-based models, and/or unsupervised approaches. Classical ML approaches commonly regard text input as static, relying on a global input text embedding, whereas CNNs, LSTMs, and LLMs handle text by processing the text as a sequence of word or token embeddings.

Past solutions do not employ ML for industrial telecommunications logs classification taking into account the entirety of the logs. A past solution provides term frequency inverse document frequency (TF-IDF) and bag of words (BOW) techniques for representing software log lines in voice over internet protocol (VoIP) soft-switch systems and classifying them using various classical ML algorithms, such as random forest (RF), support vector machine (SVM), and boosting techniques. Such past solutions only attempt to distinguish specific log entries into error, debug, or information classes, rather than diagnosing underlying root causes indicated by the logs. Such past solutions in telecommunications logs classification only tried to categorize individual lines in telecommunications logs into error, debug, or information classes. Another past solution provides a CNN-LSTM architecture to categorize individual lines in industrial telecom-related log files as either errors or non-errors. However, this past solution does not consider the entirety of the software logs for classification. Since aggregating all errors, warnings, and/or indications for telecommunications logs is critical, this past solution does not capture the full context necessary for accurate problem determination. The past approaches in the realm of log classification do not demonstrate the capability to classify massive software logs containing tens of thousands of text lines while taking into account their complete content.

The use of LLMs for industrial telecommunications logs classification may suffer from various drawbacks, despite their success in text classification, text generation, and other NLP tasks. LLMs are primarily pre-trained and fine-tuned for natural language understanding, including code. An adaptability to novel text structures, like proprietary logs, may remain constrained due to limited prior exposure to such formats. Therefore, off-the-shelf models should be pre-trained on an extensive software log corpus before they are fine-tuned for a log classification downstream task to achieve optimal performance. However, this requires an enormous amount of data (e.g., 20 times the number of parameters in the model to achieve a compute-optimal state and computing power), hampering an adaptability of LLMs to a telecommunications logs classification use case. Further, LLMs typically operate with a relatively narrow context window, ranging from 512 to 2048 tokens. This window may be considerably smaller than a volume of text contained in telecommunications software logs, resulting in truncation and potential loss of critical information. Even long-context LLMs may exhibit suboptimal performance, particularly when relevant information is situated in the middle of the context window rather than at the beginning or end. Further, LLMs demand significant memory and computational resources, even for inference, which may be undesirable in industrial settings due to higher recurring costs in model serving and deployment.

In some implementations, a compact CNN architecture is provided that offers a context window spanning up to 200,000 characters and achieves over 96% accuracy in classifying multifaceted software logs into various layers in the telecommunications protocol stack. Specifically, the compact CNN architecture may be capable of identifying defects in test runs and triaging them to the relevant department. The CNN architecture, despite being lightweight, may significantly outperform LLM-based approaches in telecommunications log classification while minimizing cost of production. The CNN architecture may use an entire content of complex telecommunications logs to identify a root cause of an issue, specifically, isolating a telecommunications protocol layer in which the defect has occurred. The LLM-based approaches may utilize various LLMs, such as LLaMA2-7B, Mixtral 8x7B, Flan-T5, BERT, and BigBird. A model associated with the compact CNN architecture, such as a defect triaging AI model, may be deployable on edge devices without dedicated hardware, and be widely applicable across software logs in various industries.

In some implementations, the compact CNN architecture may be configured for the classification of software logs produced by a network test device. A primary function of the compact CNN architecture may be to identify the specific protocol stack layer in which a defect has occurred, thereby facilitating a more streamlined defect triage process. To construct an initial embedding matrix, a separate LSTM-based model may be trained with a sequence-to-sequence (seq2seq) objective on a sufficiently-sized text corpus. This process may be analogous to software log language understanding, and may be based on the importance of industry-specific word embeddings in downstream log classification tasks. A performance of the model may be benchmarked against open-source LLMs, such as Mixtral 8x7B, LLaMA2 7B, Flan-T5, BigBird, and BERT.

In some implementations, a lightweight residual CNN architecture may classify massive software logs accurately for defect detection in 5G/6G network testing. The residual CNN architecture may support input text sequences up to 200,000 characters in a telecommunications domain, with broad implications for software log classification across disciplines. The model may be approximately 3 megabytes in size and have less than 0.8 million parameters, making the model edge-deployable and production-ready. In some implementations, the drawbacks of off-the-shelf LLMs in specialized applications may be described. To tailor the LLMs for the telecommunications domain, domain-specific pre-training and subsequent fine-tuning may be performed on data using techniques such as low-rank adaptation (LoRA) and quantization, where applicable. In some implementations, an adaptable overlapping sliding window approach may be employed to extract pretrained-LLM embeddings of lengthy software logs that often exceed the context windows of LLMs. Embeddings may be extracted from several LLMs that contain billions of parameters. Separate classifiers may be applied on top of these embeddings, which may showcase acceptable classification performance. In some implementations, a sequence-to-sequence model based on LSTM units may be developed for understanding raw logs in telecommunications. Meaningful token embeddings extracted from this model may be utilized to initialize the embedding layer of the lightweight residual CNN architecture, helping to achieve optimal performance.

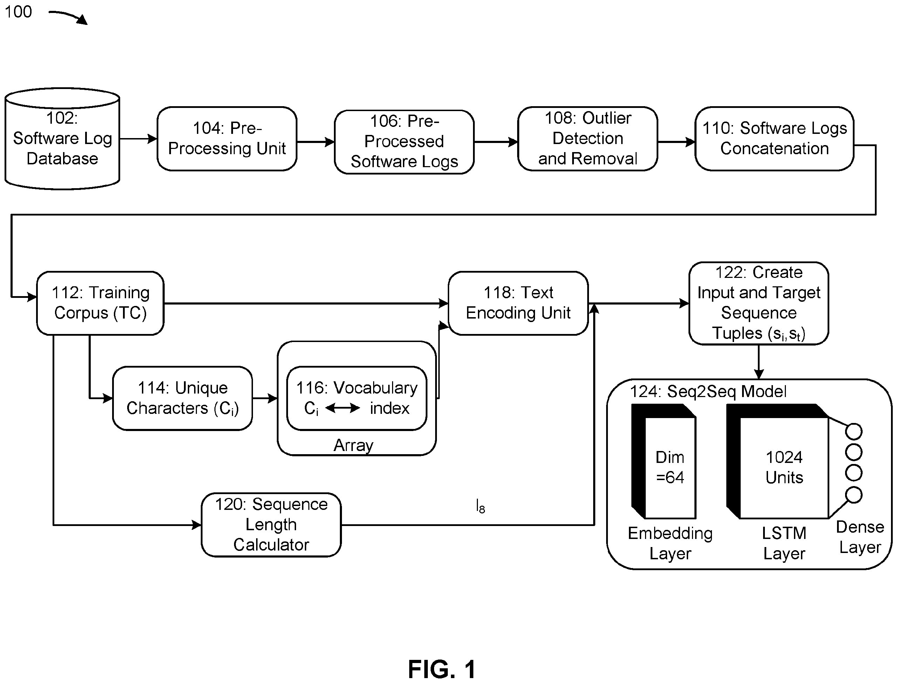

Fig. 1 is a diagram of an example 100 associated with a workflow demonstrating data preparation and an architecture of a sequence-to-sequence model.

In some implementations, as part of a sequence-to-sequence embedding technique, a sequence-to-sequence model for language understanding and a residual CNN for classification may be formulated. An ML model may be trained with a sequence-to-sequence objective for acquiring learned token embeddings from an industrial corpus. A process of transitioning from a textual representation to a numerical one may encompass multiple stages, which may involve preparing input raw logs into primarily encoded text which can be used by the sequence-to-sequence model for training. Raw logs may be voluminous, and are often associated with noise, inconsistencies, and/or occasional ambiguity.

As shown by reference number 102, a software log database, such as a historical raw logs database, may be accessed. As shown by reference number 104, raw logs may be collected, and the raw logs may be sent through a pre-processing unit (PPU). As shown by reference number 106, the PPU may capture logs related to several network testing categories, such as single-UE, single-cell, multi-UE, multi-cell, New Radio (NR) 5G tests, Long-Term Evolution (LTE) 4G tests, and/or layer 3 (L3) tests. The PPU may remove redundant information unrelated for detecting defects, such as long words or lines having a length that satisfies a threshold or numbers. The PPU may produce pre-processed software logs. As shown by reference number 108, as part of an outlier detection and removal, outlier logs may be identified based on their size using an appropriate technique, such as the Tukey's method. A box plot (or other applicable representation) may be created to show the distribution of number of characters in logs. For example, a histogram of a dataset, before and after pre-processing, may be defined, where the histogram may be a character length histogram of log files before and after cleaning. Outliers may be defined as observations that fall below $Q1 - 1.5 * IQR$ or above $Q3 + 1.5 * IQR$, where Q1 and Q3 are first and third quartiles, respectively, and IQR is an inter-quartile range (Q3 - Q1). These outliers, along with files greater than 300 kilobytes, may be removed to establish a final dataset. Such filtering may be necessary as the raw logs may occasionally be up to hundreds of megabytes in size.

As shown by reference number 110, resulting software logs may be concatenated, which may create a training corpus, as shown by reference number 112. As shown by reference number 114, given a relatively small correlation between the logs and natural language, unique characters present in the training corpus may be used as tokens. As shown by reference number 116, this approach may yield vocabulary of unique characters (e.g., a vocabulary consisting of 97 unique characters), which may allow for any piece of text within the training corpus to be encoded and for a corresponding numerical representation to be obtained, as shown by reference number 118. As shown by reference number 120, as part of a sequence length calculator, in order to create training sequences, a sequence length ($l_s$) equal to a median length of message blocks (in characters) in software command logs may be chosen. "Block" may refer to a set of information contained within Indications (I:) that record a set of events that has come back from a network, and Confirmations (C:) that record a state of execution of system commands. Such information may be critical for an AI system to be able to learn and capture defects, which may justify the rationale behind the selected $l_s$.

As shown by reference number 122, tuples of input and target sequences ($s_i$, $s_t$) may be created with matching lengths ($l_s$), where $s_t$ is formed by shifting a window of $l_w$ characters across $s_i$ within a continuous training corpus. To maintain simplicity, an assumption of $l_w = 1$ may be made. Having equal and fixed-length input and target sequences may enable a simpler recurrent neural network architecture (RNN) to be designed without an explicit decoder for sequence-to-sequence learning. As shown by reference number 124, the sequence-to-sequence model may be associated with an embedding layer and an LSTM layer. The embedding layer may represent every character in the vocabulary with an embedding of 64 dimensions, chosen heuristically. The embedding layer may be followed by the LSTM layer with 1024 units that return processed sequences, and an output fully-connected dense layer with a number of units equal to the vocabulary size. The dense layer may be applied across all returned sequences by the LSTM layer.

An optimization objective may be to minimize a negative log-likelihood of the true next sequence, in accordance with:

$$\operatorname{argmin}_\theta \frac{1}{N} \sum_{j=1}^{N} -\log P\big(s_j \mid s_{j-1}; \theta\big) \qquad (1)$$

where $N$ is the total number of input and target sequence tuples in the dataset. $P(s_j \mid s_{j-1}; \theta)$ is the conditional probability of generating a true next sequence $s_j$ given a previous sequence $s_{j-1}$ and model parameters $\theta$. With this notation, the target sequence $s_t$ equals to $s_j$ and input sequence $s_i$ equals to $s_{j-1}$. Equation (1) can be further decomposed as follows considering individual characters:

$$\operatorname{argmin}_\theta \frac{1}{N} \sum_{j=1}^{N} \sum_{t=1}^{l_s} -\log P\left(c_t^{s_j} \mid c_1^{s_{j-1}}, \dots, c_{l_s}^{s_{j-1}}; \theta\right) \qquad (2)$$

where $c_t^{s_j}$ is the character at the $t^{th}$ index of sequence $s_j$. Probability logits over the vocabulary for every character in the target sequence may be calculated through a function, such as a softmax function. The softmax function, also known a normalized exponential function, may convert a vector of real numbers into a probability distribution of possible outcomes. The softmax function may be applied at an output layer. Consequently, the sequence-to-sequence model may be trained to minimize multi-class categorical cross-entropy loss. Once the sequence-to-sequence model is trained, character embeddings may be extracted from weights stored within the embedding layer of the sequence-to-sequence model. The trained sequence-to-sequence model, primarily utilized for extracting character embeddings, may have potential for software log text generation. Character embedding may allow for the addition of character-level word embeddings during model training.

As indicated above, Fig. 1 is provided as an example. Other examples may differ from what is described with regard to Fig. 1. The number and arrangement of devices shown in Fig. 1 are provided as an example. In practice, there may be additional devices, fewer devices, different devices, or differently arranged devices than those shown in Fig. 1. Furthermore, two or more devices shown in Fig. 1 may be implemented within a single device, or a single device shown in Fig. 1 may be implemented as multiple, distributed devices. Additionally, or alternatively, a set of devices (e.g., one or more devices) shown in Fig. 1 may perform one or more functions described as being performed by another set of devices shown in Fig. 1.

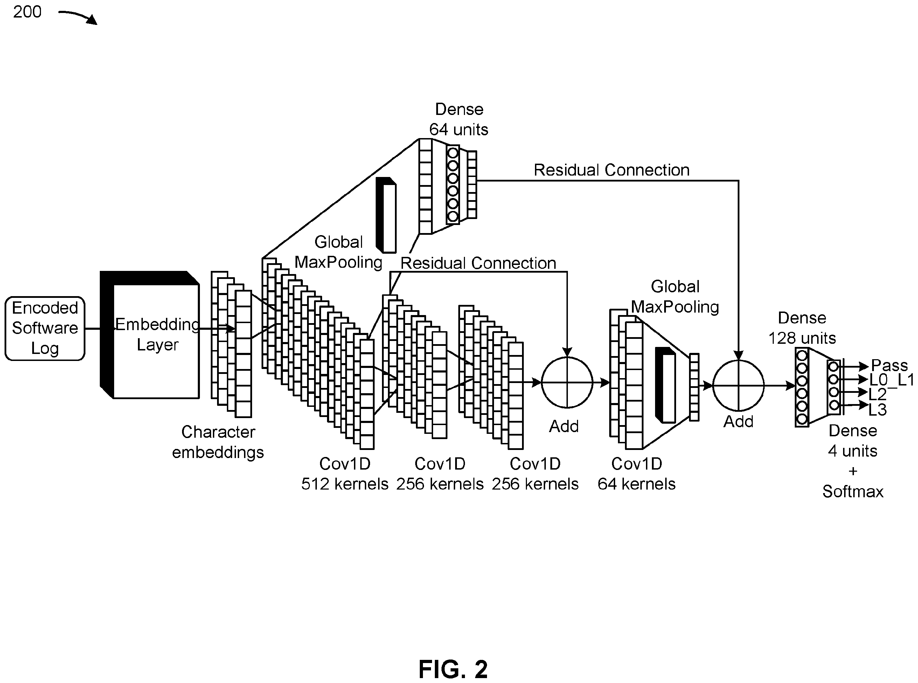

Fig. 2 is a diagram of an example 200 associated with a residual CNN architecture for software log classification.

In some implementations, the residual CNN architecture for lengthy software log classification may be based on one-dimensional convolutional layers (Conv1D). CNNs may be lightweight and consume fewer computational resources, as compared to other types of neural networks. A selection of the residual CNN architecture may stem from practical considerations in industrial production, as many target edge devices lack dedicated hardware like graphics processing units (GPUs). The residual CNN architecture may outperform other benchmarked models. A Conv1D operation applied on a discrete 1D input sequence s at a time index t with single filter w is given by:

$$y(t) = (w * s)(t) = \sum_{k=-\frac{(K-1)}{2}}^{\frac{(K-1)}{2}} w(k) \cdot s(t - k) \qquad (3)$$

where * indicates a convolution operation, y(t) is a feature map resulting from the filter applied at position t, and K is the kernel size.

As shown in Fig. 2, in the residual CNN architecture for software log classification, the CNN may include an embedding layer initialized with character embeddings extracted from a sequence-to-sequence model, which may be followed by a block of Conv1D layers before applying a global max pooling operation on processed sequences, which may result in a fixed-size representation of an input sequence. This result may be then processed through a set of fully-connected layers, followed by a softmax activation for multi-class classification. Residual connections may be applied to improve model performance.

In some implementations, the sequence-to-sequence model may be trained to classify various software logs into four distinct classes: Pass, L0_L1, L2, and L3. The Pass class may represent software logs that do not indicate any issues. L0_L1 may denote defects at a physical layer. L2 may pertain to issues within a data link layer. L3 may encompass problems related to the network or higher layers, in accordance with an Open Systems Interconnection (OSI) model. These labels for the software logs in a dataset may be extracted from historic data. A majority of test runs may complete without issues, which may result in a highly imbalanced class distribution within the dataset. The class distribution of the dataset (e.g., a full dataset) may involve different groups of samples being associated with different class labels (e.g., Pass, L0_L1, L2, or L3). To reduce the impact of class imbalance, ML models may be trained with appropriate class weights where applicable. For example, the dataset may include 3262 samples in total, where the dataset may be randomly divided into 70% training and 30% test sets. A class distribution for a test set may involve different groups of samples being associated with different class labels (e.g., Pass, L0_L1, L2, or L3).

As indicated above, Fig. 2 is provided as an example. Other examples may differ from what is described with regard to Fig. 2. The number and arrangement of devices shown in Fig. 2 are provided as an example. In practice, there may be additional devices, fewer devices, different devices, or differently arranged devices than those shown in Fig. 2. Furthermore, two or more devices shown in Fig. 2 may be implemented within a single device, or a single device shown in Fig. 2 may be implemented as multiple, distributed devices. Additionally, or alternatively, a set of devices (e.g., one or more devices) shown in Fig. 2 may perform one or more functions described as being performed by another set of devices shown in Fig. 2.

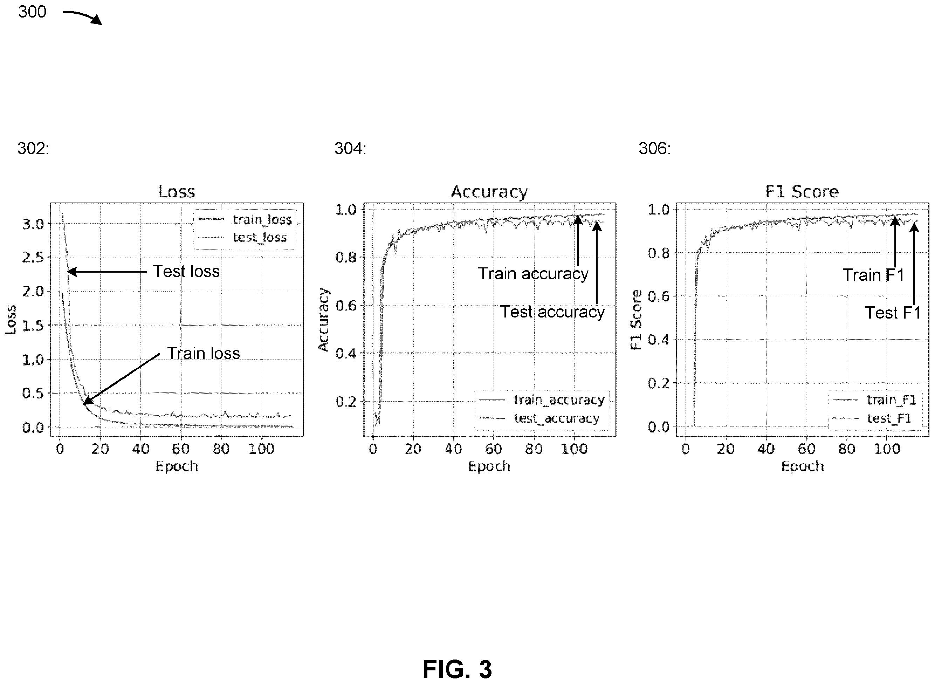

Fig. 3 is a diagram of an example 300 associated with training progress curves for a residual CNN model.

As shown in Fig. 3, the training progress of the residual CNN model may be presented. Classification results of the residual CNN model on a test set may be presented and benchmarked against other approaches including LLMs. The test set may be kept intact across all experiments. The training progress of the residual CNN model may be in terms of categorical cross-entropy loss (as shown by reference number 302), accuracy (as shown by reference number 304), and F1-score curves (as shown by reference number 306). The residual CNN model, which may be a defect triaging model, may achieve a notable 96% accuracy, markedly improving both precision and efficiency over manual engineering workflows.

As indicated above, Fig. 3 is provided as an example. Other examples may differ from what is described with regard to Fig. 3.

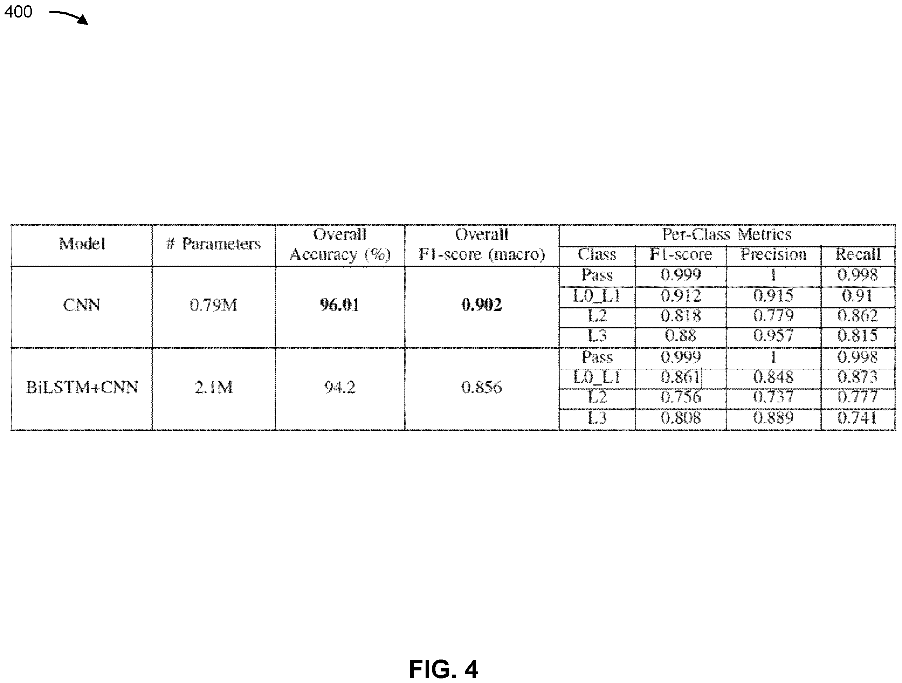

Fig. 4 is a diagram of an example 400 of a table associated with performance metrics.

As shown in Fig. 4, multi-class performance metrics of a residual CNN and BILSTM+CNN models on a test set may be captured. Although a residual CNN model may support text sequences up to 200,000 characters, a sequence length of 50,000 characters was used to obtain these results since nearly 95% of cleaned software logs are less than 50,000 characters in length. Such a trained CNN model, with its compact size of just 3 megabytes, may be ideally suited for deployment on edge devices with basic hardware resources.

On the other hand, LSTM networks may be recognized for their effectiveness in sequence classification tasks, owing to their ability to learn long-term dependencies with memory cells and gating mechanisms. LSTM components may be included in the residual CNN model, and an impact on performance may be assessed. A bidirectional LSTM layer may be added after an embedding layer of the residual CNN model (denoted as BiLSTM+CNN model), and the performance on the test set may be evaluated under the same conditions. This results in a slightly downgraded accuracy of 94.2%, despite nearly a three-fold increase in model size, which potentially suggests that in the context of software logs, it is not so much the long-range dependencies or the semantic structure that are crucial for identifying defects, but rather the presence of specific combinations of log messages.

As indicated above, Fig. 4 is provided as an example. Other examples may differ from what is described with regard to Fig. 4.

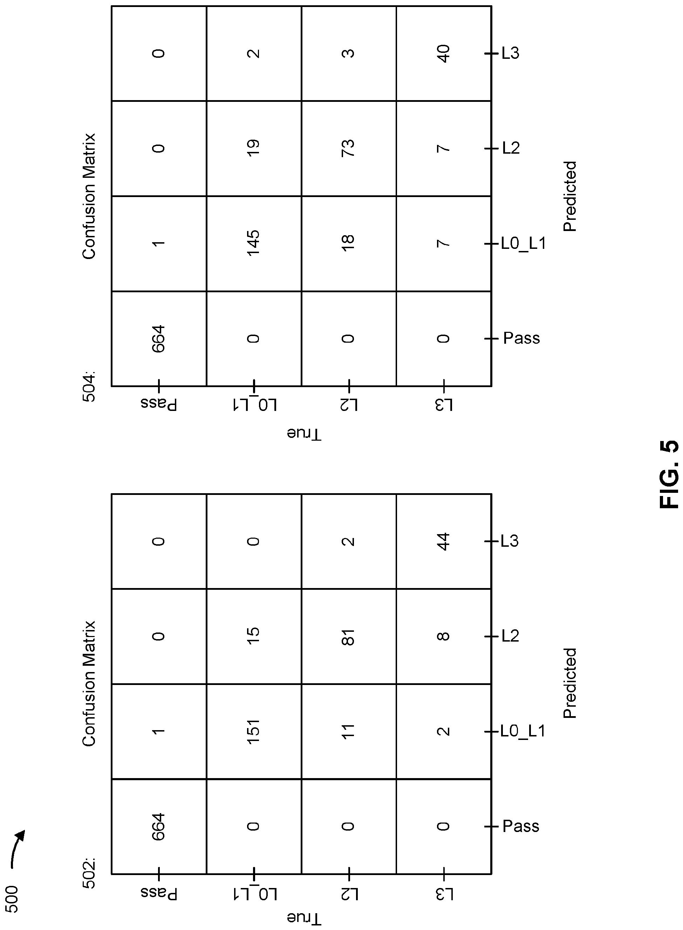

Fig. 5 is a diagram of an example 500 of confusion matrices of different models.

As shown in Fig. 5, a confusion matrix of a CNN model (as shown by reference number 502) and a confusion matrix of a CNN+BiLSTM model (as shown by reference number 504) for a test set may be generated. The confusion matrices may be tables used to define the performance of classification algorithms, where each table may have two dimensions corresponding to actual and predicted, and identical sets of classes in both dimensions. Both models may accurately detect even the least represented class (L3) that has less than one-tenth of samples compared to a dominant class.

As indicated above, Fig. 5 is provided as an example. Other examples may differ from what is described with regard to Fig. 5.

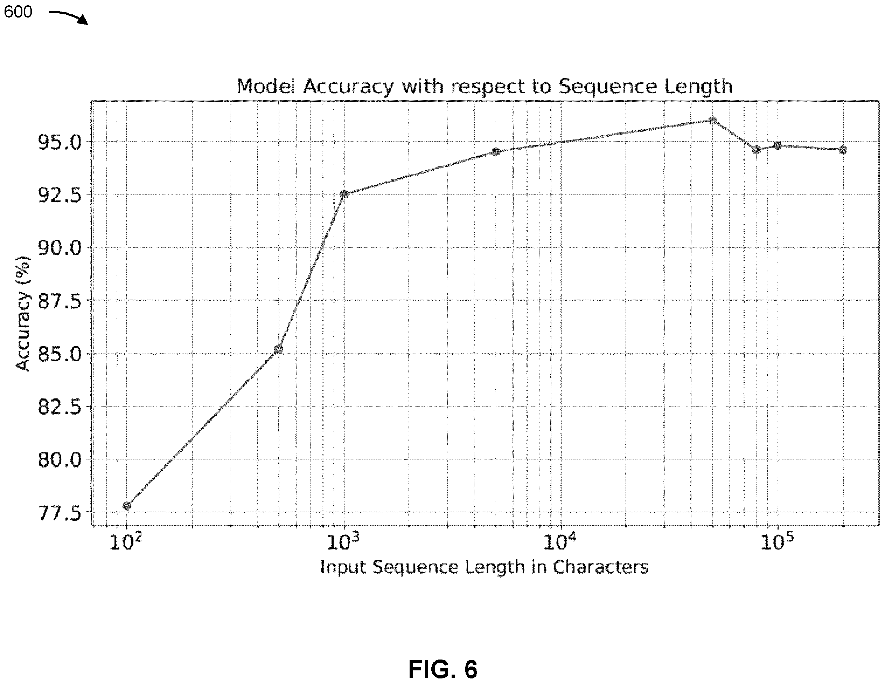

Fig. 6 is a diagram of an example 600 of a performance of a residual CNN model with varying context size.

As shown in Fig. 6, an input sequence length may impact a performance of the residual CNN model. A model accuracy with respect to sequence length may be defined, where an x-axis may represent an input sequence length in characters (the x-axis is in log scale) and a y-axis may represent an accuracy. A steady improvement in performance may be observed as the sequence length increases, up until a point where performance begins to marginally decline for extremely lengthy sequences (greater than 80,000 characters). This trend may occur because such expansive context windows may necessitate excessive padding in most input text sequences with redundant tokens, thereby diluting the pertinent information. Furthermore, the residual CNN model may be robust to the number of Conv1D layers present in a CNN architecture. Employing just a single Conv1D layer, while maintaining the rest of the CNN architecture (embedding and dense layers) intact, may yield an accuracy of approximately 93.6%. Further increasing the number of Conv1D layers, up to four, may repeatedly lead to a classification accuracy of above 95% with consistent distribution of other performance metrics.

As indicated above, Fig. 6 is provided as an example. Other examples may differ from what is described with regard to Fig. 6.

While LLMs have been generally successful in learning to categorize software logs, raw logs generated by software and hardware stacks prevalent in telecommunications industry pose unique challenges to LLMs, particularly due to their vast size and little relevance to natural language. The small context windows of off-the-shelf LLMs may be unable to capture all necessary information from large logs, which may lead to poor downstream performance. Similarly, conducting further pre-training (also known as domain adaptation) on a domain-specific corpus may be beneficial in enhancing downstream task accuracy. In this example, five pre-trained LLMs may be investigated in this specific application, where the pre-trained LLMs may include LLaMA2-7B, Mixtral_8x7B, Flan-T5, BERT, and BigBird.

While every model undergoes evaluation in its original pretrained state, both Flan-T5 and BERT are additionally chosen for domain adaptation, owing to their distinctive natures and more manageable sizes. A low-rank adaptation (LoRA) of a large language models technique may be used for further pretraining of Flan-T5 with a sequence-to-sequence language modelling objective on a software log training corpus (e.g., as shown in Fig. 1). LoRA may involve introducing trainable low-rank matrices to modify existing weights in selected layers of the model, such as attention and feed-forward layers, without altering the original pretrained weights. This allows for effective adaptation of the model for specific tasks by reducing the computational burden while maintaining model performance. Both BERT and Flan-T5 may be trained for 5 epochs, and the trained checkpoints along with their associated tokenizers may be recorded for extracting software log embeddings. The relatively small size of BERT may allow for updating all model weights during domain adaptation, conducted with a masked language modelling objective on the same training corpus.

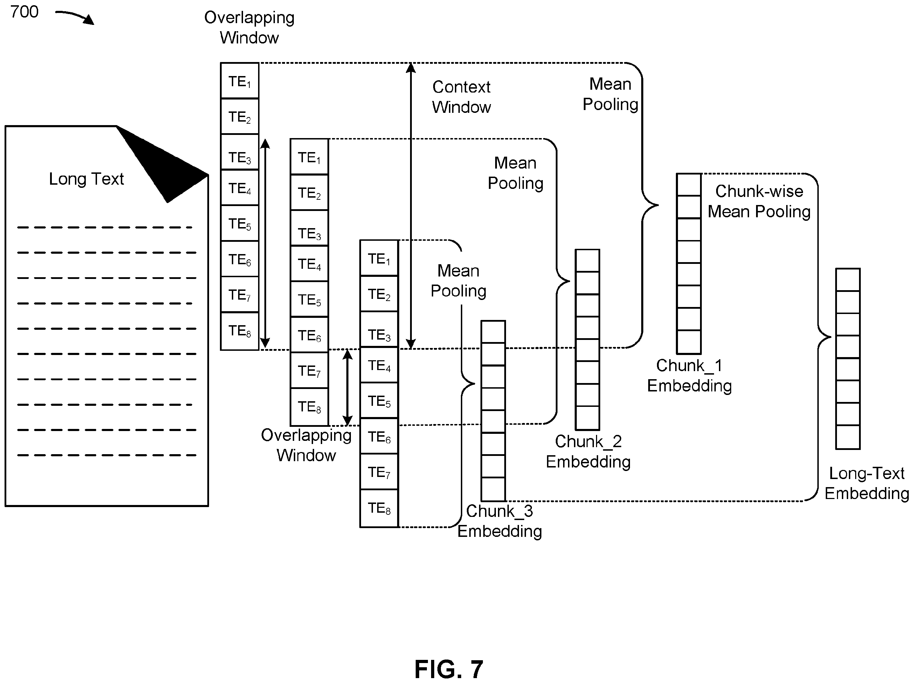

Fig. 7 is a diagram of an example 700 of an overlapping sliding window approach for text embedding extraction of a long document.

As shown in Fig. 7, the small context window of LLMs may necessitate an alternative strategy for the LLMs to sift through the entirety of long documents, so an overlapping sliding window approach may be used to extract a single embedding from lengthy text segments. LLM embedding of a given text input may be treated as a learned numerical representation that encodes the contextual meaning of that text. The overlapping sliding window approach may be used to extract embeddings of long documents using LLMs, where $TE_i$ in Fig. 7 refers to a token embedding of an $i^{th}$ token at a final hidden layer of the LLM. A token embedding dimension may typically range from 512 to 4096 for larger models.

As indicated above, Fig. 7 is provided as an example. Other examples may differ from what is described with regard to Fig. 7.

In some implementations, a long text document of length L tokens and a context window (e.g., sequence length) of $l_c(< L)$ tokens may be defined. For an adaptable overlapping window of size $w(< l_c)$ tokens, the number of overlapping text chunks that needs to pass through the model to cover the entire document, M, may be expressed as follows:

$$M = \frac{L - w}{l_c - w} \qquad\qquad (4)$$

Under this approach, the document global embedding $E_g$ may be computed as follows:

$$E_g = \frac{1}{M}\frac{1}{l_c}\sum_{k=1}^{M}\sum_{i=1}^{l_c} TE_{k,i} \qquad\qquad (5)$$

Here, $TE_{k,i}$ is the token embedding of the $i^{th}$ token of the $k^{th}$ chunk. Token embeddings may be extracted at the last hidden layer of the model. $TE_{k,i}$ is of dimension $d_{TE}$ equal to the number of units in the last hidden state of the model. A mean-pooling operation may be applied across token embeddings of a chunk to obtain the chunk embedding, and the same operation may be repeated across all chunks to obtain the document embedding. An attention mask may be considered when applying the pooling operation (e.g., pad tokens are disregarded). Text chunks may be selected with an overlap w so that some information and context from the previous windows are retained as the model slides through the text. Likewise, embeddings of all logs in the dataset may be extracted independently using every LLM examined. Due to memory constraints, the context window used for embedding extraction may be smaller than the maximum context window supported by some LLMs. In order to assess the quality of these embeddings, separate classifiers may be applied. The separate classifiers may include random forest (RF), XGBoost, and decision tree (DT) with the same defect detection objective, which may facilitate benchmarking the LLM-embedding technique against the residual CNN model. In addition to classical ML models, a similar residual 1D CNN may be utilized to classify LLM-embeddings, and the performance on the test set may be captured.

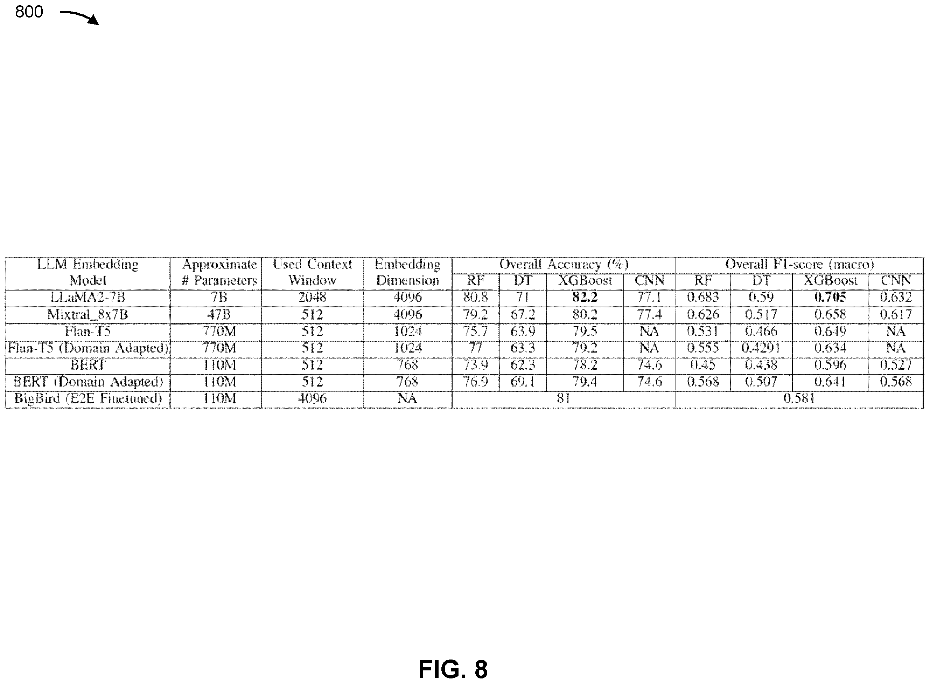

Fig. 8 is a diagram of an example 800 of a classification performance of ML models trained on text embeddings extracted from various LLMs, evaluated on a test set.

As shown in Fig. 8, the classification performance of ML models on the test set may be defined using software log embeddings extracted by LLMs. LLaMA2-7B embeddings used with an XGBoost classifier may provide the best accuracy of 82.2% across all experiments, which may represent a notable decline in performance when contrasted with results achieved by a standalone residual CNN, indicating that even some of the most powerful general purpose LLMs may perform sub-optimally in challenging domain-specific tasks such as large and complex software log classification. Large and more potent LLMs, such as LLaMA2-7B and Mixtral 8x7B, may produce higher quality embeddings resulting in higher downstream performance compared to other models. Domain adaptation may enhance the performance to some extent, as the models may have gained some understanding of the specific text format by being exposed to a targeted corpus. This enhancement may be more prominent for BERT, compared to Flan-T5, likely due to distinct domain adaptation strategies. Flan-T5 is pretrained on the corpus by applying LoRA exclusively to the query and value matrices in the transformer block, and therefore the initial token embeddings or model weights that have been optimized for natural language understanding do not get updated. These tokens derived from a corpus of natural language, and their embeddings, may not be relevant in this specific context. In contrast, BERT is end-to-end trained during domain adaptation, allowing the model to learn token embeddings and model parameters tailored to the corpus, leading to a more substantial boost in performance. A downstream task performance may be reliant on the quality of embeddings, as more advanced architectures such as 1D-CNNs do not lead to higher performance relative to some classical ML models.

In some implementations, an original pretrained BigBird base model may be fine-tuned on a labeled dataset, such that its relatively large context window of 4096 tokens may be able to capture as much information as possible from software command logs. Instead of extracting embeddings, the model may be end-to-end fine-tuned with a classification head, and all model parameters may be updated during training. This results in an accuracy and F1-score of 81% and 0.581 on the test set, respectively, which is consistent with the LLM-embedding classification results.

In some implementations, an analysis of similar size models may reveal that, when the model context window is sufficiently large, fine-tuning LLMs end-to-end on a downstream classification task may lead to higher performance, compared to employing separate classifiers on pre-trained LLM embeddings. Nevertheless, none of the LLM-based approaches achieves comparable performance to a residual CNN model, indicating that domain-tailored ML architectures may be better suited for industrial applications that require processing miscellaneous formats of text. In addition to delivering superior performance, such lightweight ML models may minimize the cost of production and are practically feasible for in-house or field deployment.

As indicated above, Fig. 8 is provided as an example. Other examples may differ from what is described with regard to Fig. 8.

In some implementations, training and evaluation experiments may be performed on an open-source platform that enables the orchestration of machine learning workflows on a cluster (e.g., a set of nodes that run containerized applications). During the training and evaluation, a CNN architecture and hyperparameters may be optimized empirically. The CNN model may be trained for up to 200 epochs with an early stopping patience of 30 epochs. An optimizer with a learning rate of $10^{-4}$ may be used to optimize model parameters. $L_2$ regularization may be applied to selected layers to reduce overfitting and improve generalization of the model. The batch size may be adjusted accordingly within a range of 16 to 512 to accommodate large context sizes. For the largest context size tested (200k), the model may complete training in under one hour. A similar hyperparameter setting may be employed for a sequence-to-sequence LSTM model that has 4.6 million parameters. BERT and Flan-T5 models may each be trained for 5 epochs for domain adaptation. LoRA adapters, with a rank of 16 and a scaling factor of 32, may be used to train Flan-T5. A batch size may be set to 64 for BERT and 12 for Flan-T5. Larger models (LLaMA2-7B and Mixtral 8x7B) may be 4-bit quantized before extracting embeddings for computational efficiency. An overlapping window size may be set to half the sequence length for embedding extraction. A BigBird base model may be fine-tuned for up to 200 epochs with a batch size of 8 and an early stopping patience of 30 epochs. The hyperparameters of the ML models used with LLM-embeddings may be optimized using a 5-fold cross validation strategy with grid search. Classification performance metrics may be calculated as follows:

$$\text{Precision} = \frac{TP}{TP + FP}$$
$$\text{Recall} = \frac{TP}{TP + FN} \qquad (8)$$
$$\text{F1\_score} = 2 \times \frac{\text{Precision} \times \text{Recall}}{\text{Precision} + \text{Recall}}$$

where TP, FP, and FN indicate true positives, false positives and false negatives, respectively.

In some implementations, a robust CNN architecture may be tailored for classification of intricate software logs in the telecommunications sector, with a specific focus on a network test device. The CNN architecture, which may be adept at processing extensive text sequences up to 200,000 characters, may markedly outperform some LLM-based approaches. Such advancement may be critical in mitigating the limitations of manual log analysis, such as inefficiency and error-proneness, offering a streamlined, automated approach for defect triage in 5G/6G network testing. As a result, an edge-deployable ML model may be used for accurate defect detection from raw logs in the telecommunications industry, and also provides valuable insights into the application of AI in industrial settings, paving the way for future innovations in software log classification.

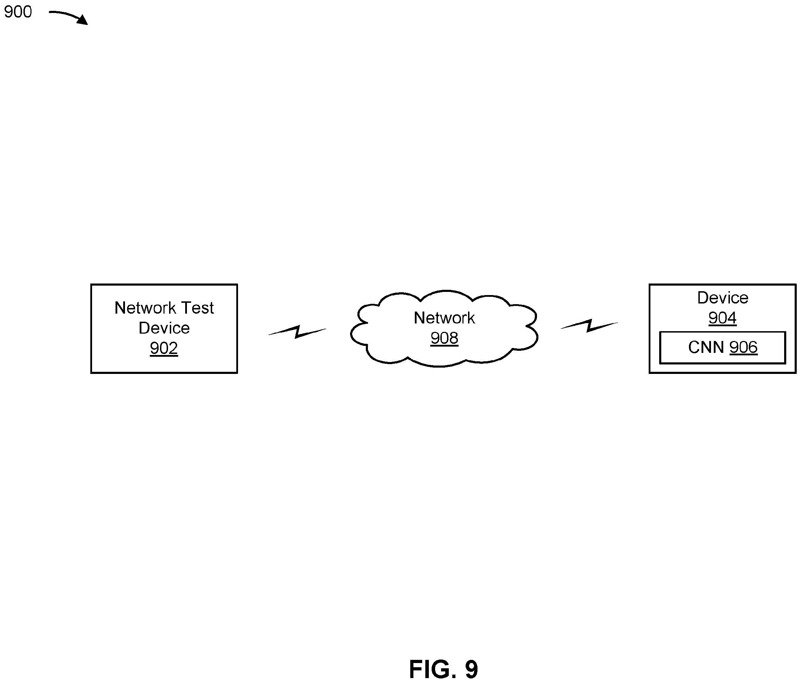

Fig. 9 is a diagram of an example environment 900 in which systems and/or methods described herein may be implemented. As shown in Fig. 9, environment 900 may include a network test device 902, a device 904 on which a CNN 906 is deployed, and a network 908. Devices of environment 900 may interconnect via wired connections, wireless connections, or a combination of wired and wireless connections.

The network test device 902 may include one or more devices capable of receiving, processing, storing, routing, and/or providing information associated with software log classification using the CNN 906, as described elsewhere herein. The network test device 902 may include a computing device. The network test device 902 may be used by network equipment manufacturers for function, system integration, capacity, and stress testing and emulation of a plurality of mobile devices, across multiple cells, to set up and test network nodes. The network test device 902 may deliver voice, data, realistic mobility models, and 4G/5G core emulation, thereby providing a comprehensive validation solution. The network test device 902 may ensure that users in a network are obtaining adequate quality of service. The network test device 902 may ensure that the network is satisfying latency and round-trip time requirements for voice and time-critical applications.

The device 904 may include one or more devices capable of receiving, generating, storing, processing, providing, and/or routing information associated with software log classification using the CNN 906, as described elsewhere herein. The device 904 may include a communication device and/or a computing device. For example, the device 904 may include a server, such as an application server, a client server, a web server, a database server, a host server, a proxy server, a virtual server (e.g., executing on computing hardware), or a server in a cloud computing system. In some implementations, the device 904 may include computing hardware used in a cloud computing environment.

The network 908 may include one or more wired and/or wireless networks. For example, the network 908 may include a cellular network (e.g., a 5G network, a 4G network, an LTE network, a Third Generation (3G) network, a code division multiple access (CDMA) network, etc.), a public land mobile network (PLMN), a local area network (LAN), a wide area network (WAN), a metropolitan area network (MAN), a telephone network (e.g., the Public Switched Telephone Network (PSTN)), a private network, an ad hoc network, an intranet, the Internet, a fiber optic-based network, and/or a combination of these or other types of networks. The network 908 may enable communication among the one or more devices of environment 300.

The number and arrangement of devices and networks shown in Fig. 9 are provided as an example. In practice, there may be additional devices and/or networks, fewer devices and/or networks, different devices and/or networks, or differently arranged devices and/or networks than those shown in Fig. 9. Furthermore, two or more devices shown in Fig. 9 may be implemented within a single device, or a single device shown in Fig. 9 may be implemented as multiple, distributed devices. Additionally, or alternatively, a set of devices (e.g., one or more devices) of environment 900 may perform one or more functions described as being performed by another set of devices of environment 900.

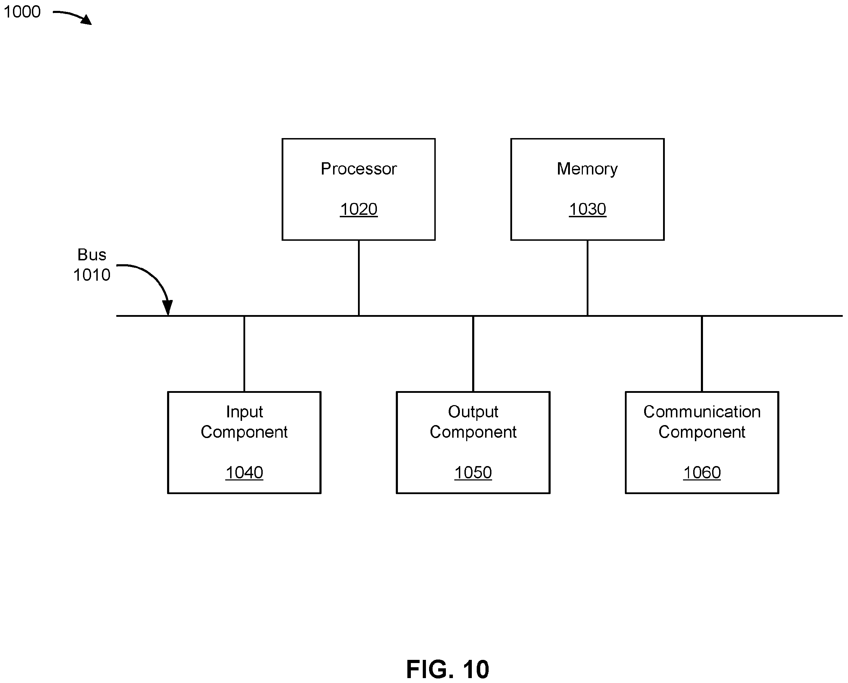

Fig. 10 is a diagram of example components of a device 1000 associated with software log classification using CNNs. The device 1000 may correspond to a device on which the CNN is deployed (e.g., device 904). In some implementations, the device may include one or more devices 1000 and/or one or more components of the device 1000. As shown in Fig. 10, the device 1000 may include a bus 1010, a processor 1020, a memory 1030, an input component 1040, an output component 1050, and/or a communication component 1060.

The bus 1010 may include one or more components that enable wired and/or wireless communication among the components of the device 1000. The bus 1010 may couple together two or more components of Fig. 10, such as via operative coupling, communicative coupling, electronic coupling, and/or electric coupling. For example, the bus 1010 may include an electrical connection (e.g., a wire, a trace, and/or a lead) and/or a wireless bus. The processor 1020 may include a central processing unit, a graphics processing unit, a microprocessor, a controller, a microcontroller, a digital signal processor, a field-programmable gate array, an application-specific integrated circuit, and/or another type of processing component. The processor 1020 may be implemented in hardware, firmware, or a combination of hardware and software. In some implementations, the processor 1020 may include one or more processors capable of being programmed to perform one or more operations or processes described elsewhere herein.

The memory 1030 may include volatile and/or nonvolatile memory. For example, the memory 1030 may include random access memory (RAM), read only memory (ROM), a hard disk drive, and/or another type of memory (e.g., a flash memory, a magnetic memory, and/or an optical memory). The memory 1030 may include internal memory (e.g., RAM, ROM, or a hard disk drive) and/or removable memory (e.g., removable via a universal serial bus connection). The memory 1030 may be a non-transitory computer-readable medium. The memory 1030 may store information, one or more instructions, and/or software (e.g., one or more software applications) related to the operation of the device 1000. In some implementations, the memory 1030 may include one or more memories that are coupled (e.g., communicatively coupled) to one or more processors (e.g., processor 1020), such as via the bus 1010. Communicative coupling between a processor 1020 and a memory 1030 may enable the processor 1020 to read and/or process information stored in the memory 1030 and/or to store information in the memory 1030.

The input component 1040 may enable the device 1000 to receive input, such as user input and/or sensed input. For example, the input component 1040 may include a touch screen, a keyboard, a keypad, a mouse, a button, a microphone, a switch, a sensor, a global positioning system sensor, a global navigation satellite system sensor, an accelerometer, a gyroscope, and/or an actuator. The output component 1050 may enable the device 1000 to provide output, such as via a display, a speaker, and/or a light-emitting diode. The communication component 1060 may enable the device 1000 to communicate with other devices via a wired connection and/or a wireless connection. For example, the communication component 1060 may include a receiver, a transmitter, a transceiver, a modem, a network interface card, and/or an antenna.

The device 1000 may perform one or more operations or processes described herein. For example, a non-transitory computer-readable medium (e.g., memory 1030) may store a set of instructions (e.g., one or more instructions or code) for execution by the processor 1020. The processor 1020 may execute the set of instructions to perform one or more operations or processes described herein. In some implementations, execution of the set of instructions, by one or more processors 1020, causes the one or more processors 1020 and/or the device 1000 to perform one or more operations or processes described herein. In some implementations, hardwired circuitry may be used instead of or in combination with the instructions to perform one or more operations or processes described herein. Additionally, or alternatively, the processor 1020 may be configured to perform one or more operations or processes described herein. Thus, implementations described herein are not limited to any specific combination of hardware circuitry and software.

The number and arrangement of components shown in Fig. 10 are provided as an example. The device 1000 may include additional components, fewer components, different components, or differently arranged components than those shown in Fig. 10. Additionally, or alternatively, a set of components (e.g., one or more components) of the device 1000 may perform one or more functions described as being performed by another set of components of the device 1000.

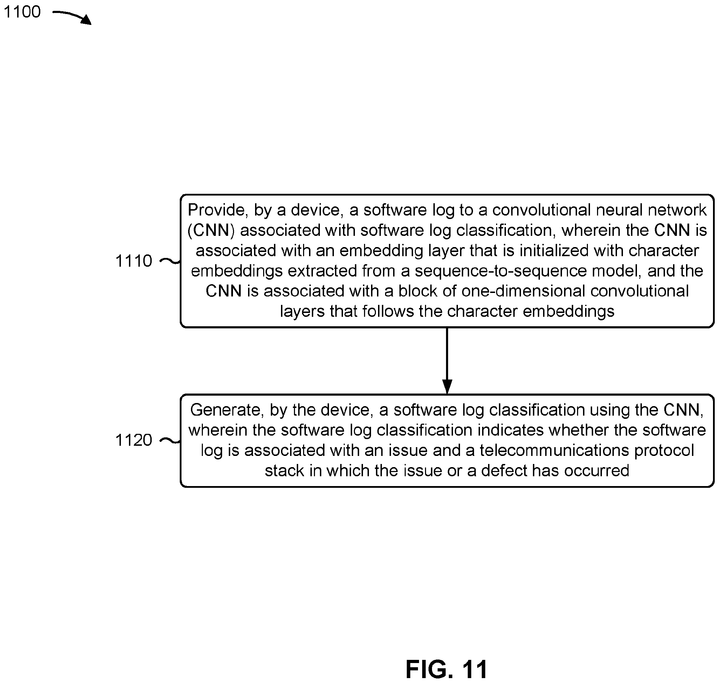

Fig. 11 is a flowchart of an example process 1100 associated with software log classification using CNNs. In some implementations, one or more process blocks of Fig. 11 may be performed by a device (e.g., device 904). Additionally, or alternatively, one or more process blocks of Fig. 11 may be performed by one or more components of device 1000, such as processor 1020, memory 1030, input component 1040, output component 1050, and/or communication component 1060.

As shown in Fig. 11, process 1100 may include providing, by the device, a software log to a CNN associated with software log classification (block 1110). The CNN may be associated with an embedding layer that is initialized with character embeddings extracted from a sequence-to-sequence model. The CNN may be associated with a block of one-dimensional convolutional layers that follows the character embeddings. The sequence-to-sequence model may be based on LSTM units, and token embeddings extracted from the sequence-to-sequence model may be used to initialize the embedding layer of the CNN. The software log may include raw data generated by a telecommunications network emulator. The software log may be an input text sequence having up to 200,000 characters in a telecommunications domain. The sequence-to-sequence model may be associated with language understanding, and the CNN may be a residual CNN associated with software log classification. The CNN may be deployable on an edge device.

In some implementations, the device may provide a historical raw logs database to a pre-processing unit. The device may capture, via the pre-processing unit, software logs related to one or more network testing categories, where the one or more network testing categories may be associated with single-UE, single-cell, multi-UE, multi-cell, NR 5G tests, LTE tests, and/or L3 tests. The device may obtain pre-processed software logs. The device may perform a detection and a removal of outlier logs from the pre-processed software logs. The device may create a training corpus based on a concatenation of resulting software logs, wherein unique characters present in the training corpus are used as tokens based on a level of correlation between software logs and natural language. The device may encode a piece of text within the training corpus and obtain a corresponding numerical representation, based on using the unique characters as the tokens. The device may create a training sequence based on a sequence length equal to a median length of message blocks, in terms of a number of characters, in the software logs. The device may create tuples of input and target sequences with matching lengths, where equal and fixed-length input and target sequences enable an RNN architecture without an explicit decoder for sequence-to-sequence learning. The device may form, based on the tuples of input and target sequences, the sequence-to-sequence model, wherein the sequence-to-sequence model is associated with the embedding layer and an LSTM layer.

In some implementations, the CNN may be associated with a first accuracy level and an LLM for software log classification may be associated with a second accuracy level, and the first accuracy level may be greater than the second accuracy level. The LLM for software log classification may be associated with domain-specific pre-training and subsequent fine tuning on data using LoRA, and the LLM may be associated with an adaptable overlapping sliding window to extract pre-trained LLM embeddings of software logs that exceed a typical context window of LLMs.

As shown in Fig. 11, process 1100 may include generating, by the device, a software log classification using the CNN, wherein the software log classification indicates whether the software log is associated with an issue and a telecommunications protocol stack in which the issue or a defect has occurred (block 1120). The software log classification may be a first value that indicates that the software log does not have any issues. The software log classification may be a second value that indicates that the issue is at a physical layer. The software log classification may be a third value that indicates that the issue is at a data link layer. The software log classification may be a fourth value that indicates that the issue is at a network layer or at a higher layer.

Although Fig. 11 shows example blocks of process 1100, in some implementations, process 1100 may include additional blocks, fewer blocks, different blocks, or differently arranged blocks than those depicted in Fig. 11. Additionally, or alternatively, two or more of the blocks of process 1100 may be performed in parallel.

The foregoing disclosure provides illustration and description, but is not intended to be exhaustive or to limit the implementations to the precise forms disclosed. Modifications and variations may be made in light of the above disclosure or may be acquired from practice of the implementations.

As used herein, the term "component" is intended to be broadly construed as hardware, firmware, or a combination of hardware and software. It will be apparent that systems and/or methods described herein may be implemented in different forms of hardware, firmware, and/or a combination of hardware and software. The actual specialized control hardware or software code used to implement these systems and/or methods is not limiting of the implementations. Thus, the operation and behavior of the systems and/or methods are described herein without reference to specific software code - it being understood that software and hardware can be used to implement the systems and/or methods based on the description herein.

As used herein, satisfying a threshold may, depending on the context, refer to a value being greater than the threshold, greater than or equal to the threshold, less than the threshold, less than or equal to the threshold, equal to the threshold, not equal to the threshold, or the like.

Even though particular combinations of features are recited in the claims and/or disclosed in the specification, these combinations are not intended to limit the disclosure of various implementations. In fact, many of these features may be combined in ways not specifically recited in the claims and/or disclosed in the specification. Although each dependent claim listed below may directly depend on only one claim, the disclosure of various implementations includes each dependent claim in combination with every other claim in the claim set. As used herein, a phrase referring to "at least one of" a list of items refers to any combination of those items, including single members. As an example, "at least one of: a, b, or c" is intended to cover a, b, c, a-b, a-c, b-c, and a-b-c, as well as any combination with multiple of the same item.

When "a processor" or "one or more processors" (or another device or component, such as "a controller" or "one or more controllers") is described or claimed (within a single claim or across multiple claims) as performing multiple operations or being configured to perform multiple operations, this language is intended to broadly cover a variety of processor architectures and environments. For example, unless explicitly claimed otherwise (e.g., via the use of "first processor" and "second processor" or other language that differentiates processors in the claims), this language is intended to cover a single processor performing or being configured to perform all of the operations, a group of processors collectively performing or being configured to perform all of the operations, a first processor performing or being configured to perform a first operation and a second processor performing or being configured to perform a second operation, or any combination of processors performing or being configured to perform the operations. For example, when a claim has the form "one or more processors configured to: perform X; perform Y; and perform Z," that claim should be interpreted to mean "one or more processors configured to perform X; one or more (possibly different) processors configured to perform Y; and one or more (also possibly different) processors configured to perform Z."

No element, act, or instruction used herein should be construed as critical or essential unless explicitly described as such. Also, as used herein, the articles "a" and "an" are intended to include one or more items, and may be used interchangeably with "one or more." Further, as used herein, the article "the" is intended to include one or more items referenced in connection with the article "the" and may be used interchangeably with "the one or more." Furthermore, as used herein, the term "set" is intended to include one or more items (e.g., related items, unrelated items, or a combination of related and unrelated items), and may be used interchangeably with "one or more." Where only one item is intended, the phrase "only one" or similar language is used. Also, as used herein, the terms "has," "have," "having," or the like are intended to be open-ended terms. Further, the phrase "based on" is intended to mean "based, at least in part, on" unless explicitly stated otherwise. Also, as used herein, the term "or" is intended to be inclusive when used in a series and may be used interchangeably with "and/or," unless explicitly stated otherwise (e.g., if used in combination with "either" or "only one of").

## Claims

1.  A method, comprising:

    providing, by a device, a software log to a convolutional neural network (CNN) associated with software log classification, wherein:

    the CNN is associated with an embedding layer that is initialized with character embeddings extracted from a sequence-to-sequence model, and
    the CNN is associated with a block of one-dimensional convolutional layers that follows the character embeddings; and

    generating, by the device, a software log classification using the CNN, wherein the software log classification indicates whether the software log is associated with an issue and a telecommunications protocol stack in which the issue or a defect has occurred.

2.  The method of claim 1, wherein the sequence-to-sequence model is based on long short-term memory (LSTM) units, and token embeddings extracted from the sequence-to-sequence model are used to initialize the embedding layer of the CNN.

3.  The method of claim 1 or claim 2, wherein the software log classification is one of:

    a first value that indicates that the software log does not have any issues;
    a second value that indicates that the issue is at a physical layer;
    a third value that indicates that the issue is at a data link layer; or
    a fourth value that indicates that the issue is at a network layer or at a higher layer.

4.  The method of any of claims 1 to 3, further comprising:

    providing, by the device, a historical raw logs database to a pre-processing unit;
    capturing, by the device and via the pre-processing unit, software logs related to one or more network testing categories, wherein the one or more network testing categories are associated with one or more of single-user equipment (UE), single-cell, multi-UE, multi-cell, New Radio (NR) Fifth Generation (5G) tests, Long Term Evolution (LTE) tests, or layer 3 (L3) tests;

obtaining, by the device, pre-processed software logs;

performing, by the device, a detection and a removal of outlier logs from the pre-processed software logs;

creating, by the device, a training corpus based on a concatenation of resulting software logs, wherein unique characters present in the training corpus are used as tokens based on a level of correlation between software logs and natural language;

encoding, by the device, a piece of text within the training corpus and obtaining a corresponding numerical representation, based on using the unique characters as the tokens;

creating, by the device, a training sequence based on a sequence length equal to a median length of message blocks, in terms of a number of characters, in the software logs;

creating, by the device, tuples of input and target sequences with matching lengths, wherein equal and fixed-length input and target sequences enables a recurrent neural network (RNN) architecture without an explicit decoder for sequence-to-sequence learning; and

forming, by the device and based on the tuples of input and target sequences, the sequence-to-sequence model, wherein the sequence-to-sequence model is associated with the embedding layer and a long short-term memory (LSTM) layer.

5. The method of claim 4, wherein the embedding layer represents characters in a vocabulary with an embedding of a number of dimensions chosen heuristically, wherein the embedding layer is followed by the LSTM layer that returns processed sequences and a dense layer with a number of units equal to a vocabulary size, and the dense layer is applied across returned sequences by the LSTM layer.

6. The method of any of claims 1 to 5, wherein the software log includes raw data generated by a telecommunications network emulator.

7. The method of any of claims 1 to 6, wherein the software log is an input text sequence having up to 200,000 characters in a telecommunications domain.

8. The method of any of claims 1 to 7, wherein the sequence-to-sequence model is associated with language understanding, and the CNN is a residual CNN associated with software log classification.

9. The method of any of claims 1 to 8, wherein the CNN is associated with a first accuracy level and a large language model (LLM) for software log classification is associated with a second accuracy level, and the first accuracy level is greater than the second accuracy level;

optionally wherein the LLM for software log classification is associated with domain-specific pre-training and subsequent fine tuning on data using low-rank adaptation (LoRA), and the LLM is associated with an adaptable overlapping sliding window to extract pre-trained LLM embeddings of software logs that exceed a typical context window of LLMs.

10. The method of any of claims 1 to 9, wherein the CNN is deployable on an edge device.

11. A device, comprising:

one or more memories; and

one or more processors, communicatively coupled to the one or more memories, configured to:

provide a software log to a convolutional neural network (CNN) associated with software log classification, wherein:

the CNN is associated with an embedding layer that is initialized with character embeddings extracted from a sequence-to-sequence model, and

the CNN is associated with a block of one-dimensional convolutional layers that follows the character embeddings; and

generate a software log classification using the CNN, wherein the software log classification indicates whether the software log is associated with an issue and a telecommunications protocol stack in which the issue or a defect has occurred.

12. The device of claim **11,** wherein:

the sequence-to-sequence model is based on long short-term memory (LSTM) units, and token embeddings extracted from the sequence-to-sequence model are used to initialize the embedding layer of the CNN; and/or the software log classification is one of:

a first value that indicates that the software log does not have any issues;
a second value that indicates that the issue is at a physical layer;
a third value that indicates that the issue is at a data link layer; or
a fourth value that indicates that the issue is at a network layer or at a higher layer; and/or

the embedding layer represents characters in a vocabulary with an embedding of a number of dimensions chosen heuristically, wherein the embedding layer is followed by the LSTM layer that returns processed sequences and a dense layer with a number of units equal to a vocabulary size, and the dense layer is applied across returned sequences by the LSTM layer; and/or
the software log includes raw data generated by a telecommunications network emulator;
the software log is an input text sequence having up to 200,000 characters in a telecommunications domain;
the sequence-to-sequence model is associated with language understanding, and the CNN is a residual CNN associated with software log classification; and
the CNN is deployable on an edge device

13. The device of claim 11 or claim 12, further comprising:

providing, by the device, a historical raw logs database to a pre-processing unit;
capturing, by the device and via the pre-processing unit, software logs related to one or more network testing categories, wherein the one or more network testing categories are associated with one or more of single-user equipment (UE), single-cell, multi-UE, multi-cell, New Radio (NR) Fifth Generation (5G) tests, Long Term Evolution (LTE) tests, or layer 3 (L3) tests;
obtaining, by the device, pre-processed software logs;
performing, by the device, a detection and a removal of outlier logs from the pre-processed software logs;
creating, by the device, a training corpus based on a concatenation of resulting software logs, wherein unique characters present in the training corpus are used as tokens based on a level of correlation between software logs and natural language;
encoding, by the device, a piece of text within the training corpus and obtaining a corresponding numerical representation, based on using the unique characters as the tokens;
creating, by the device, a training sequence based on a sequence length equal to a median length of message blocks, in terms of a number of characters, in the software logs;
creating, by the device, tuples of input and target sequences with matching lengths, wherein equal and fixed-length input and target sequences enables a recurrent neural network (RNN) architecture without an explicit decoder for sequence-to-sequence learning; and forming, by the device and based on the tuples of input and target sequences, the sequence-to-sequence model, wherein the sequence-to-sequence model is associated with the embedding layer and a long short-term memory (LSTM) layer.

14. The device of any of claims 11 to 13, wherein the CNN is associated with a first accuracy level and a large language model (LLM) for software log classification is associated with a second accuracy level, and the first accuracy level is greater than the second accuracy level;
optionally wherein the LLM for software log classification is associated with domain-specific pre-training and subsequent fine tuning on data using low-rank adaptation (LoRA), and the LLM is associated with an adaptable overlapping sliding window to extract pre-trained LLM embeddings of software logs that exceed a typical context window of LLMs.

15. A non-transitory computer-readable medium storing a set of instructions, the set of instructions comprising:
one or more instructions that, when executed by one or more processors of a device, cause the device to:

provide a software log to a convolutional neural network (CNN) associated with software log classification, wherein:

the CNN is associated with an embedding layer that is initialized with character embeddings extracted from a sequence-to-sequence model, and
the CNN is associated with a block of one-dimensional convolutional layers that follows the character embeddings; and

generate a software log classification using the CNN, wherein the software log classification indicates whether the software log is associated with an issue and a telecommunications protocol stack in which the issue or a defect has occurred.

FIG. 1

FIG. 2

300

302:

**Loss**

304:

**Accuracy**

306:

**F1 Score**

FIG. 3

EP 4 617 879 A1

400

| Model | # Parameters | Overall Accuracy (%) | Overall F1-score (macro) | Per-Class Metrics | | | |
|---|---|---|---|---|---|---|---|
| | | | | Class | F1-score | Precision | Recall |
| CNN | 0.79M | **96.01** | **0.902** | Pass | 0.999 | 1 | 0.998 |
| | | | | L0_L1 | 0.912 | 0.915 | 0.91 |
| | | | | L2 | 0.818 | 0.779 | 0.862 |
| | | | | L3 | 0.88 | 0.957 | 0.815 |
| BiLSTM+CNN | 2.1M | 94.2 | 0.856 | Pass | 0.999 | 1 | 0.998 |
| | | | | L0_L1 | 0.861 | 0.848 | 0.873 |
| | | | | L2 | 0.756 | 0.737 | 0.777 |
| | | | | L3 | 0.808 | 0.889 | 0.741 |

**FIG. 4**

EP 4 617 879 A1

500

**502:** Confusion Matrix

| True \ Predicted | Pass | L0_L1 | L2 | L3 |
|---|---|---|---|---|
| Pass | 664 | 1 | 0 | 0 |
| L0_L1 | 0 | 151 | 15 | 0 |
| L2 | 0 | 11 | 81 | 2 |
| L3 | 0 | 2 | 8 | 44 |

**504:** Confusion Matrix

| True \ Predicted | Pass | L0_L1 | L2 | L3 |
|---|---|---|---|---|
| Pass | 664 | 1 | 0 | 0 |
| L0_L1 | 0 | 145 | 19 | 2 |
| L2 | 0 | 18 | 73 | 3 |
| L3 | 0 | 7 | 7 | 40 |

**FIG. 5**

FIG. 6

EP 4 617 879 A1

**FIG. 7**

800

| LLM Embedding Model | Approximate # Parameters | Used Context Window | Embedding Dimension | Overall Accuracy (%) | | | | Overall F1-score (macro) | | | |
|---|---|---|---|---|---|---|---|---|---|---|---|
| | | | | RF | DT | XGBoost | CNN | RF | DT | XGBoost | CNN |
| LLaMA2-7B | 7B | 2048 | 4096 | 80.8 | 71 | **82.2** | 77.1 | 0.683 | 0.59 | **0.705** | 0.632 |
| Mixtral_8x7B | 47B | 512 | 4096 | 79.2 | 67.2 | 80.2 | 77.4 | 0.626 | 0.517 | 0.658 | 0.617 |
| Flan-T5 | 770M | 512 | 1024 | 75.7 | 63.9 | 79.5 | NA | 0.531 | 0.466 | 0.649 | NA |
| Flan-T5 (Domain Adapted) | 770M | 512 | 1024 | 77 | 63.3 | 79.2 | NA | 0.555 | 0.4291 | 0.634 | NA |
| BERT | 110M | 512 | 768 | 73.9 | 62.3 | 78.2 | 74.6 | 0.45 | 0.438 | 0.596 | 0.527 |
| BERT (Domain Adapted) | 110M | 512 | 768 | 76.9 | 69.1 | 79.4 | 74.6 | 0.568 | 0.507 | 0.641 | 0.568 |
| BigBird (E2E Finetuned) | 110M | 4096 | NA | 81 | | | | 0.581 | | | |

**FIG. 8**

EP 4 617 879 A1

900

| Network Test Device 902 | Network 908 | Device 904 <br> CNN 906 |

FIG. 9

1000

```
                  ┌─────────────┐      ┌─────────────┐
                  │  Processor  │      │   Memory    │
                  │             │      │             │
                  │    1020     │      │    1030     │
                  └──────┬──────┘      └──────┬──────┘
                         │                    │
  Bus                    │                    │
  1010 ↘─────────────────┴────────────────────┴──────────────────┐
  ────────────┬──────────────────┬──────────────────┬────────────
              │                  │                  │
       ┌──────┴──────┐    ┌──────┴──────┐    ┌───────┴────────┐
       │    Input    │    │   Output    │    │ Communication  │
       │  Component  │    │  Component  │    │   Component    │
       │             │    │             │    │                │
       │    1040     │    │    1050     │    │     1060       │
       └─────────────┘    └─────────────┘    └────────────────┘
```

**FIG. 10**

1100 →

1110 ~ Provide, by a device, a software log to a convolutional neural network (CNN) associated with software log classification, wherein the CNN is associated with an embedding layer that is initialized with character embeddings extracted from a sequence-to-sequence model, and the CNN is associated with a block of one-dimensional convolutional layers that follows the character embeddings

1120 ~ Generate, by the device, a software log classification using the CNN, wherein the software log classification indicates whether the software log is associated with an issue and a telecommunications protocol stack in which the issue or a defect has occurred

**FIG. 11**

EP 4 617 879 A1

Europäisches
Patentamt

European
Patent Office

Office européen
des brevets

# EUROPEAN SEARCH REPORT

**Application Number**

EP 25 16 3807

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SHEHU YUSUFU ET AL: "Enhancements to Language Modeling Techniques for Adaptable Log Message Classification", IEEE TRANSACTIONS ON NETWORK AND SERVICE MANAGEMENT, IEEE, vol. 19, no. 4, 19 July 2022 (2022-07-19), pages 4662-4675, XP011933736, DOI: 10.1109/TNSM.2022.3192756 [retrieved on 2022-07-20] | 1-3,6-15 | INV. G06F11/07 G06N3/045 G06N3/0464 |
| A | * abstract; figure 1 *<br>* Section II.B, III, IV * | 4,5 | |
| X | LU SIYANG ET AL: "Detecting Anomaly in Big Data System Logs Using Convolutional Neural Network", 2018 IEEE 16TH INTL CONF ON DEPENDABLE, AUTONOMIC AND SECURE COMPUTING, 16TH INTL CONF ON PERVASIVE INTELLIGENCE AND COMPUTING, 4TH INTL CONF ON BIG DATA INTELLIGENCE AND COMPUTING AND CYBER SCIENCE AND TECHNOLOGY CONGRESS(DASC/PICOM/DATACOM/CYBERSCI, 12 August 2018 (2018-08-12), pages 151-158, XP033431490, DOI: 10.1109/DASC/PICOM/DATACOM/CYBERSCITEC.2018.00037 [retrieved on 2018-10-26] | 1-3,6-15 | |
| A | * abstract; figure 2 *<br>* Section III.A, III.B, V.B, V.C * | 4,5 | |

TECHNICAL FIELDS
SEARCHED (IPC)

G06F
G06N

The present search report has been drawn up for all claims

| Place of search | Date of completion of the search | Examiner |
|---|---|---|
| The Hague | 9 July 2025 | Houtgast, Ernst |

EPO FORM 1503 03.82 (P04C01)